(19) Europäisches Patentamt / European Patent Office / Office européen des brevets

(11) **EP 3 433 938 B1**

(12) **FASCICULE DE BREVET EUROPEEN**

(45) Date de publication et mention
de la délivrance du brevet:
**28.08.2024 Bulletin 2024/35**

(21) Numéro de dépôt: **17716970.3**

(22) Date de dépôt: **23.03.2017**

(51) Classification Internationale des Brevets (IPC):
**G06K 19/077** *(2006.01)* **G06K 7/10** *(2006.01)*
**H04B 5/26** *(2024.01)* **H04B 5/77** *(2024.01)*

(52) Classification Coopérative des Brevets (CPC):
**G06K 7/10297; G06K 19/07762; H04B 5/26;
H04B 5/77**

(86) Numéro de dépôt international:
**PCT/FR2017/050679**

(87) Numéro de publication internationale:
**WO 2017/162988 (28.09.2017 Gazette 2017/39)**

(54) **OBJET PORTABLE ET SON ANTENNE NFC**

TRAGBARES OBJEKT UND NFC-ANTENNE DAFÜR

PORTABLE OBJECT AND NFC ANTENNA THEREOF

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.03.2016 FR 1652604**

(43) Date de publication de la demande:
**30.01.2019 Bulletin 2019/05**

(73) Titulaire: **Orange
92130 Issy-les-Moulineaux (FR)**

(72) Inventeurs:
• **PETIT, Stéphane
14200 Herouville Saint Clair (FR)**
• **LEVIONNAIS, Philippe
14000 Caen (FR)**

(56) Documents cités:
**WO-A2-2006/039722 US-A1- 2007 120 687
US-A1- 2015 136 858**

## Description

### Domaine technique

L'invention se rapporte de manière générale aux télécommunications, et plus précisément aux communications sans contact utilisant des technologies radio à courte distance, notamment de type NFC (Near Field - NF Communications).

Elle s'applique plus particulièrement à l'antenne d'objets portables équipés de ressources physiques et logicielles incluant un module de communication en champ proche de type passif, apte à communiquer avec des terminaux externes de lecture.

### Etat de la technique

Les communications « NFC », basées principalement sur la norme ISO (International Standard Organisation) 14443, utilisent des technologies sans fil pour permettre un échange d'informations entre deux périphériques éloignés d'une courte distance, typiquement inférieure à dix centimètres.

Ces applications sans contact peuvent être, par exemple, relatives à des transactions électroniques dans le domaine des transports publics, ou bien également des applications d'identification, de contrôle d'accès, etc. Une communication NFC est établie entre deux entités sans contact, dites entités NFC, l'une opérant en tant que carte sans contact et l'autre opérant en tant que lecteur de carte sans contact. Une telle entité NFC est composée d'un dispositif de communication en champ proche et d'une antenne associée qui lui permet de mettre en place une communication sans contact avec une autre entité NFC. L'entité NFC qui opère en tant que carte sans contact peut par exemple correspondre à une étiquette radio, en anglais « Tag NFC ». Une entité NFC qui opère en tant que lecteur de carte peut correspondre par exemple à un terminal de paiement électronique ou un équipement pour valider des tickets électroniques de transport, etc.

Les fonctionnalités d'une telle entité sans contact peuvent être fournies par un dispositif complexe, par exemple un terminal de téléphonie mobile, un ordinateur, une tablette électronique, etc. Cependant ces terminaux mobiles sont coûteux et encombrants, réservés de ce fait à une certaine catégorie de personnes, excluant notamment les enfants. Il est souhaitable dans ce contexte de pouvoir bénéficier d'objets très simples et très compacts pouvant offrir de telles capacités. Pour ne pas être égaré par l'utilisateur tout en restant pratique d'utilisation, un tel objet peut se présenter avantageusement sous forme d'un bracelet électronique ou de tout autre objet portable à porter sur le corps d'un utilisateur.

De simples transpondeurs passifs peuvent être utilisés à cet effet. Un transpondeur passif est dépourvu d'alimentation électrique. Le document D1 (US 2015/136858 A1 - FINN DAVID [IE] ET AL) décrit ainsi un module de puce de transpondeur à couplage capacitif amélioré, comprenant une puce RFID, éventuellement des plages de contact, une antenne de module et un cadre de couplage, le tout sur un substrat commun. Le cadre de couplage peut se présenter sous la forme d'un anneau, ayant un bord intérieur, un bord extérieur et une ouverture centrale, disposés étroitement adjacents à et entourant l'antenne du module. Une fente peut s'étendre du bord intérieur au bord extérieur du cadre de couplage de sorte que le cadre de couplage soit en «boucle ouverte». Un dispositif RFID peut comprendre un module de puce de transpondeur ayant une antenne de module, un substrat de dispositif et une structure d'antenne disposée sur le substrat de dispositif et connectée à l'antenne de module. Une partie d'une couche conductrice restant après la gravure d'une antenne de module peut être segmentée pour avoir plusieurs structures conductrices isolées plus petites.

La portée d'un transpondeur passif est cependant limitée par le facteur de couplage qui s'établit entre les deux antennes des deux entités sans contact : plus l'antenne du transpondeur est petite, ce qui s'avère inévitable dans un objet portable de type bracelet, plus la portée de l'objet est réduite, ce qui rend la communication difficile et aléatoire.

De surcroît, dans un tel dispositif, l'antenne peut être mal placée dans le bracelet : si le porteur ne sait pas où situe l'antenne, il peut présenter son poignet au lecteur d'une manière telle que l'antenne est trop éloignée de celle du lecteur.

Pour répondre à ce problème, des technologies à base de modulation active (en anglais : "active load modulation") ont été proposées. Un tel système est décrit par exemple dans l'ouvrage « RFID-Handbuch - Grundlagen und praktische Anwendungen von Transpondern, kontaktlosen Chipkarten und NFC » de Klaus Finkenzeller (HASSER, 2015). Elles augmentent considérablement la portée de l'objet NFC pour une taille d'antenne identique, mais elles supposent l'introduction d'une source d'énergie associée au composant NFC.

Il existe donc un besoin pour un objet portable simple et peu coûteux, comme par exemple un bracelet, dépourvu de pile ou d'une quelconque source d'énergie mais néanmoins efficace en termes de communication en champ proche.

L'invention vient améliorer la situation en visant d'une manière générale à obtenir un circuit d'antenne pour un tel objet.

### L'invention

A cet effet, selon un aspect matériel, l'invention a pour objet un objet portable selon la revendication 1.

L'antenne selon l'invention s'étend substantiellement le long du support du bracelet, permettant au champ magnétique incident de pénétrer l'antenne et donc de générer un courant induit quelle que soit l'orientation de l'objet porté lorsqu'il est présenté au lecteur.

Par « substantiellement », on entend que l'antenne couvre une partie importante du support, par exemple plus de la moitié. Si l'antenne s'étend ainsi substantiellement le long du support, lorsque l'objet portable est un bracelet porté au poignet, l'antenne s'enroule autour du poignet du porteur en même temps que le bracelet, et donc la présentation dudit bracelet devant le lecteur peut se faire de manière relativement libre, car le champ incident pénètre le bracelet indépendamment de sa position devant le lecteur : une partie de l'antenne recevra les lignes de champ magnétique, quelle que soit l'orientation du poignet. Il est donc possible de positionner le poignet, et donc le bracelet, très librement dans l'espace, tout en restant dans la portée du champ magnétique, de manière à établir une communication avec le lecteur. Au contraire, l'utilisation d'une étiquette NFC selon l'état de l'art oblige à choisir un endroit privilégié du bracelet (le dessus par exemple, de la même manière qu'il est usuel de le faire pour un cadran de montre) pour insérer l'étiquette, dont l'antenne est souvent sensiblement carrée. Dans ce cas l'utilisateur doit « viser » le lecteur avec son bracelet de manière à ce que les deux antennes soient positionnées à proximité l'une de l'autre et face à face. Si le porteur présente l'antenne parallèlement au champ du lecteur, le champ magnétique incident n'est pas reçu correctement et la communication ne peut s'établir. Si le porteur présente le dessous ou le côté de son poignet au lecteur (alors que l'antenne est située dessus), le champ magnétique incident n'est pas reçu correctement et la communication ne peut s'établir. Ceci présente un inconvénient majeur lorsque le porteur ne connaît pas la position de l'antenne, ou ne parvient pas à positionner correctement le bracelet (par exemple parce qu'il porte un autre objet). L'enroulement de l'antenne autour du support, et donc du poignet de l'utilisateur facilite donc grandement l'utilisation de l'objet.

Par « bracelet », on entend tout objet capable de s'enrouler autour d'une partie du corps d'un utilisateur (poignet, cheville, doigt, etc.)

Selon l'invention, l'antenne d'un objet portable tel que décrit par la revendication 1 est formée d'une pluralité de spires définissant un axe central longitudinal, comportant une longueur totale de ladite antenne le long de son axe longitudinal et une largeur perpendiculairement à son axe longitudinal,
La longueur, la largeur, le nombre et les dimensions des spires sont calculés de manière à contraindre la résistance électrique formée par l'antenne.

Par « contraindre », on entend ici limiter au mieux la résistance pour répondre aux contraintes de l'application. Avantageusement, une antenne formée de plusieurs spires améliore l'inductance mutuelle entre les antennes et permet donc une meilleure communication entre le lecteur et le récepteur.

Les inventeurs ont optimisé expérimentalement le nombre de spires et conclu qu'un bon compromis se situe entre trois et cinq spires. En effet, une augmentation trop importantes du nombre de spires fait, comme il est bien connu de l'homme du métier, augmenter la résistance de l'antenne.

Aussi, comme il sera détaillé par la suite, les dimensions de l'antenne et les caractéristiques des spires peuvent être calculées de manière à minimiser la résistance, donc la bande passante de l'antenne, et donc la puissance consommée ou émise par l'antenne. Ceci est particulièrement avantageux dans le contexte visé, où l'objet est dépourvu d'alimentation interne : la puissance nécessaire à une communication correcte avec le lecteur est assurée sans alimentation interne de l'objet portable.

Les relations entre les dimensions de l'antenne, le nombre de spires, leurs caractéristiques et sa résistance sont bien connues de l'homme du métier et seront décrites par la suite.

Selon l'invention, un objet portable selon la revendication 1 est tel que la longueur de l'antenne est au moins égale à la moitié de celle du support.

L'antenne s'étend sur au moins la moitié du support et s'enroule donc sur plus de la moitié de la circonférence du poignet de l'utilisateur. De cette manière, le porteur peut présenter son poignet au lecteur dans de nombreuses orientations (dessus, dessous, de côté, etc.)

Selon une autre variante de ce mode de mise en oeuvre particulier de l'invention, un objet portable tel que décrit ci-dessus est en outre caractérisé en ce que la longueur de l'antenne est sensiblement égale à la longueur du support.

Avantageusement selon ce mode, l'antenne s'étend sur une majeure partie du support et s'enroule donc presque entièrement autour du poignet de l'utilisateur. De cette manière le porteur peut présenter son poignet au lecteur dans n'importe quelle orientation (dessus, dessous, de côté, etc.).

Selon une autre variante de ce mode de mise en oeuvre particulier de l'invention, un objet portable tel que décrit ci-dessus est en outre caractérisé en ce que la longueur de l'antenne est supérieure à la longueur du support.

Avantageusement selon ce mode, l'antenne est plus longue que le support et peut donc s'enrouler plusieurs fois autour du poignet de l'utilisateur. Ceci améliore encore l'efficacité de la réception du champ magnétique, en particulier lorsque le bracelet est petit, par exemple s'il s'agit d'un bracelet à enrouler autour d'un doigt de l'utilisateur (une bague) et non pas de son poignet.

Selon encore une autre variante de ce mode de mise en oeuvre particulier de l'invention, qui pourra être mise en oeuvre alternativement ou cumulativement avec les précédentes, un objet portable tel que décrit ci-dessus est en outre caractérisé en ce que la largeur de l'antenne est choisie sensiblement égale à la largeur du support.

Avantageusement selon ce mode, l'antenne utilise tout le support disponible du bracelet, ce qui maximise les capacités de communication avec le lecteur.

Selon une autre variante de ce mode de mise en oeuvre particulier de l'invention, qui pourra être mise en oeuvre alternativement ou cumulativement avec les précédentes, un objet portable tel que décrit ci-dessus est en outre caractérisé en ce que la largeur des spires est égale à la distance inter-spires.

Avantageusement selon cette variante, la puissance consommée par l'antenne est réduite, ce qui est particulièrement intéressant dans le contexte d'une antenne qui n'est pas alimentée.

Selon une autre variante de ce mode de mise en oeuvre particulier de l'invention, qui pourra être mise en oeuvre alternativement ou cumulativement avec les précédentes, un objet portable tel que décrit ci-dessus est en outre caractérisé en ce que l'antenne comporte :

- trois spires
- une largeur de spires de 0.5 mm
- une largeur inter-spires de 0.5 mm.

Avantageusement, les inventeurs ont constaté qu'un tel agencement rendait l'objet portable particulièrement efficace pour le contexte recherché.

Selon un autre mode de mise en oeuvre particulier de l'invention, qui pourra être mis en oeuvre alternativement ou cumulativement avec le précédent, un objet portable tel que décrit ci-dessus est en outre caractérisé en ce que l'antenne est fixée au support de manière amovible.

Avantageusement selon ce mode, l'antenne peut être fixée sur différents supports et/ou types de supports et déplacée d'un support à l'autre.

Selon un autre mode de mise en oeuvre particulier de l'invention, qui pourra être mis en oeuvre alternativement ou cumulativement avec le premier, un objet portable tel que décrit ci-dessus est en outre caractérisé en ce que l'antenne est fixée au support de manière permanente.

Avantageusement selon ce mode, l'antenne peut être fixée de manière permanente, par exemple collée ou moulée, de manière à augmenter la solidité de la liaison entre l'antenne et le support, ainsi qu'à diminuer le coût de revient de l'objet.

Selon un autre mode de mise en oeuvre particulier de l'invention, qui pourra être mis en oeuvre alternativement ou cumulativement avec les précédents, l'antenne comporte une face dite « intérieure » faisant face au poignet lorsque l'objet est porté, l'objet étant caractérisé en ce que l'antenne est revêtue de plastoferrite sur ladite face intérieure.

Avantageusement selon ce mode, lorsque l'antenne est portée, elle isole le poignet du porteur des radiations électromagnétiques émises par le lecteur et par l'antenne de l'objet portable. Accessoirement, elle peut aussi isoler l'antenne elle-même des interférences.

Selon un autre aspect matériel, l'invention porte sur une antenne telle que décrite dans l'une des revendications précédentes.

L'invention sera mieux comprise à la lecture de la description qui suit, donnée à titre d'exemple et faite en référence aux dessins annexés.

Les figures :

- la figure 1 représente le contexte général d'utilisation d'un objet portable plongé dans un champ électromagnétique, apte à fournir des services NFC à son porteur.

- la figure 2 représente un schéma de l'antenne de l'objet portable selon un mode de réalisation de l'invention.

- La figure 3 représente une vue schématique de l'objet portable selon un mode de réalisation de l'invention.

- la figure 4a représente une vue schématique de la réception du champ magnétique par l'antenne lorsque l'objet est porté selon une première orientation du poignet d'un utilisateur.

- la figure 4b représente une vue schématique de la réception du champ magnétique par l'antenne lorsque l'objet est porté selon une seconde orientation du poignet d'un utilisateur.

Description détaillée d'un exemple de réalisation illustrant l'invention

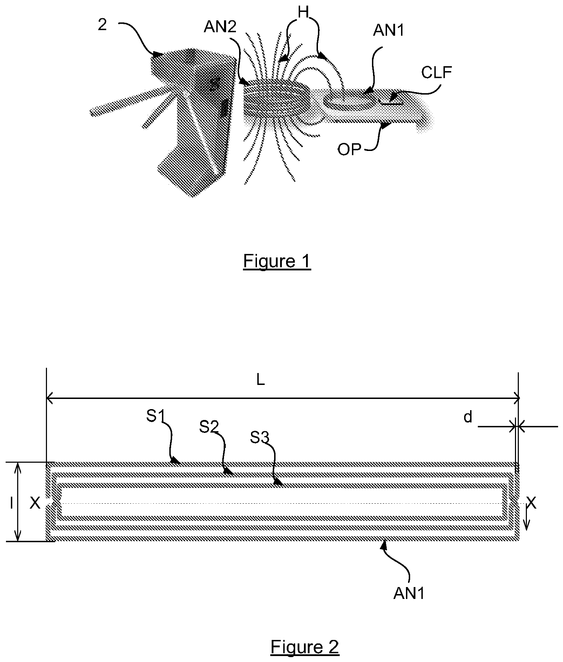

La figure 1 représente le contexte général d'utilisation d'un dispositif, ou objet portable (OP), apte à fournir des services NFC à son porteur (non représenté), selon l'état de l'art. Un tel service NFC est par exemple un service d'achat et de consommation de titres de transports, matérialisé par le lecteur, ou borne (2). Une fois que les applications et données nécessaires au bon fonctionnement du service sont chargées dans le dispositif portable, il se comporte comme une carte à puce sans contact.

L'objet, ou dispositif portable (OP) comprend au minimum :

- des moyens de communication par champ proche de type NFC, incluant classiquement :

  - une antenne NFC (AN1) ;
  - un composant NFC, appelé CLF (ContactLess Frontend), capable d'assurer des communications en champ proche de type NFC, avec un lecteur externe, selon cet exemple un lecteur (borne) de validation de tickets (2) ;

- un support, matérialisé ici par un support de carte magnétique sur lequel sont fixés (posés, collés, etc.) l'antenne et le microcontrôleur.

Comme il est bien connu de l'homme du métier, l'antenne NFC (AN1) de l'objet fonctionne en interaction avec l'antenne (AN2) du lecteur. Cette interaction prend la forme d'un couplage magnétique qui permet l'échange d'énergie entre les deux antennes. Elle s'appuie sur le champ magnétique (H) généré par le courant qui circule dans la première antenne. L'intensité du champ magnétique H se mesure en Ampères par mètre (A/m). L'antenne est généralement constituée de plusieurs spires constituant un bobinage. Le champ magnétique H généré par le lecteur est dirigé dans un sens qui dépend du sens du courant dans la bobine de l'antenne. La direction du champ magnétique généré est orthogonale au plan des spires de la première antenne. Selon le schéma, il est également perpendiculaire au plan des spires de la deuxième antenne (celle de l'objet portable) telle que présentée au lecteur. Il génère classiquement un courant électrique induit dans le composant NFC de l'objet portable.

L'antenne selon cet exemple est dépourvue d'alimentation interne à l'objet portable. Le courant électrique induit permet à lui seul d'assurer la communication.

La principale difficulté d'un tel dispositif portable, lorsque son antenne est de petite taille et non-alimentée, est d'offrir néanmoins une bonne efficacité radio pour être capable d'émettre ou recevoir un signal avec une puissance correcte.

De manière générale, la puissance du signal délivrée par l'antenne NFC est directement proportionnelle à la largeur de sa bande passante. On rappelle que la bande passante d'une antenne correspond à la bande de fréquence où le transfert d'énergie de l'antenne vers le récepteur (ou l'inverse) est maximale.

Pour un champ induit H constant, on peut montrer que la puissance P émise ou reçue par l'antenne peut être modélisée sous la forme :

$$P = k * \Delta\omega \qquad (1)$$

Ou k est une constante, et $\Delta\omega$ est la bande passante que l'on souhaite obtenir.

Pour un champ H donné, la puissance dépend donc directement de la bande passante ($\Delta\omega$) de l'antenne. Si la bande passante est large, la puissance à émettre pour une qualité de signal suffisante peut devenir très élevée. En d'autres termes, plus la bande passante est large, et plus la puissance à générer doit être élevée. Dans le cas où le circuit associé à l'antenne peut être alimenté, ceci n'est pas très important car cette alimentation peut pallier les déficiences de l'antenne en lui fournissant une puissance supplémentaire. Si le dispositif est dépourvu d'alimentation, en revanche, il devient problématique de générer une telle puissance.

Dans le contexte qui nous intéresse, c'est-à-dire en l'absence d'alimentation, il est donc important que la bande passante de l'antenne reste faible. Or, il est bien connu que la bande passante d'une antenne est proportionnelle à sa résistance intrinsèque (additionnée éventuellement à une résistance ajoutée en série avec son bobinage). La bande passante s'exprime en effet classiquement sous la forme :

$$\Delta\omega / w_0 = 1/Q = R/L \, w_0 \qquad (2)$$

où :

- R est la résistance de l'antenne,
- L son inductance,
- WO la fréquence de résonance du circuit, et
- Q est le facteur de qualité de l'antenne.

Un objectif dans ce contexte est donc de réduire la résistance de l'antenne.

Il est naturellement possible de réduire, voire d'annuler la résistance placée en série avec le bobinage dans ce type d'antenne. Ceci n'est cependant pas suffisant pour atteindre l'objectif de conserver une bande passante relativement faible et une qualité radio néanmoins correcte de l'antenne.

L'antenne décrite à la figure 2 résout ces problèmes.

La figure 2 représente une antenne en vue de dessus pour un objet portable de type bracelet selon un mode de réalisation de l'invention.

Grâce à l'antenne selon l'invention, on parvient à garder une bande passante « raisonnable », c'est-à-dire peu élevée, de manière à limiter la puissance rayonnée ou reçue par l'antenne. L'antenne selon ce mode de réalisation fournit simultanément les trois propriétés suivantes :

- elle est adaptée à la forme d'un bracelet à porter au poignet de l'utilisateur ;
- elle offre une résistance, et donc une bande passante, relativement faible, dans le but de limiter la puissance du signal émis ou reçu (tout en gardant un rapport signal sur bruit correct) ;
- elle est mécaniquement flexible.

Chacune de ces propriétés va maintenant être discutée.

Forme du Bracelet

L'antenne de la figure 2 présente deux axes de symétrie : un axe longitudinal XX et un axe transverse YY perpendiculaire à XX.

Afin de s'intégrer au mieux dans le bracelet de l'objet portable, l'antenne est conçue « en longueur » c'est-à-dire que sa longueur L le long de l'axe XX est largement supérieure à sa largeur l le long de l'axe YY, qui est relativement réduite car le bracelet ne doit pas être trop large, ce qui présenterait des inconvénients de manipulation et d'esthétique pour le porteur. Selon un mode de réalisation préféré, on prendra l=10 millimètres (largeur raisonnable pour un bracelet porté au poignet) et L=100 millimètres ; la circonférence moyenne du poignet d'un adulte est d'environ 16 cm, une longueur de 10 cm couvre donc substantiellement le poignet, c'est-à-dire plus de la moitié de la circonférence moyenne du poignet d'un adulte.

### Propriétés électriques, résistance

L'antenne se présente classiquement sous la forme d'un fil constituant plusieurs spires bobinées. Par spire, on entend ici un élément de bobinage qui réalise un tour complet autour de l'axe XX de l'antenne. Comme il est bien connu de l'homme du métier, dans le domaine de fréquences du NFC (Hautes Fréquences, HF), la résistance de l'antenne n'est pas égale seulement à la résistance du fil constituant le bobinage. Elle dépend aussi du matériau dont est faite l'antenne et de ses caractéristiques dimensionnelles, notamment de la largeur des spires, les inventeurs ont constaté que les dimensions suivantes conviennent parfaitement à l'utilisation recherchée :

- trois spires
- une largeur de spires de 0.5 mm
- une largeur inter-spires de 0.5 mm
- une longueur de 10 cm
- une largeur de 1 cm

On remarquera que

- La largeur de l'antenne est imposée par la largeur du bracelet.
- La longueur de l'antenne est adaptée à la longueur du bracelet et à la circonférence moyenne du poignet d'un utilisateur, de façon à pouvoir être enroulée autour du poignet.
- les autres caractéristiques sont dérivées expérimentalement de ces dimensions imposées.

Selon un mode de réalisation préféré, l'antenne est au moins partiellement recouverte de plastoferrite.
La plastoferrite, collée ou fixée par tout autre moyen sur le côté de l'antenne qui fait face au poignet de l'utilisateur, présente ici un double avantage :

- classiquement, elle immunise de ce côté l'environnement des émissions magnétiques (contrairement au métal qui ferait perdre ses caractéristiques à l'antenne à cause des courants de Foucault engendrés) ; en d'autres termes, la « face cachée » de l'antenne est protégée des perturbations éventuelles qui peuvent se produire du côté « actif » de l'antenne (celui qui est présentée au lecteur) ;

- elle isole le poignet du porteur des rayonnements électromagnétiques en provenance des antennes.

Selon un mode de réalisation préférée, l'antenne comporte trois spires, chaque spire a une largeur de 0,5 mm, et la distance d'écartement entre les spires (S1, S2, S3) est égale à 0,5 millimètres.

### Propriétés mécaniques, flexibilité

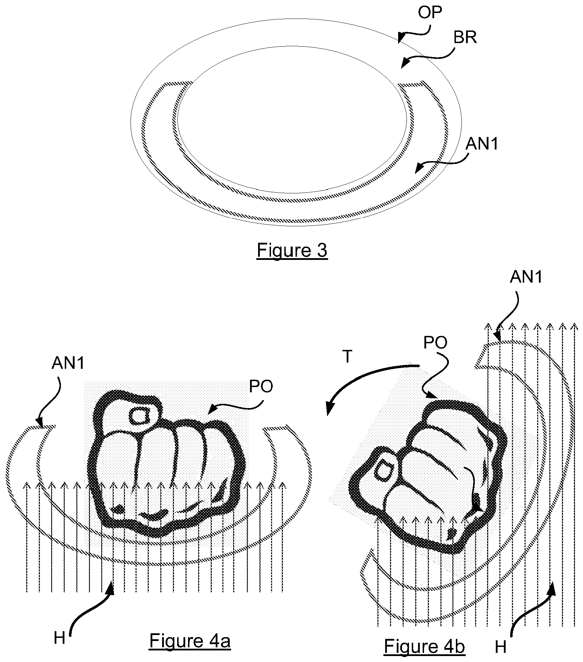

Au repos, comme représenté sur la figure 2, l'antenne se présente à plat. Elle est ensuite fixée ou collée au support du bracelet, selon toute méthode à la portée de l'homme du métier. Lorsque l'utilisateur porte le bracelet au poignet, le bracelet se trouve enroulé et entraîne l'antenne dans cet enroulement autour de l'ace YY, comme présenté à la figure 3.
La figure 3 représente schématiquement l'antenne insérée dans le bracelet selon un mode de réalisation de l'invention. L'antenne est vue de côté (dans un plan perpendiculaire à celui du poignet de l'utilisateur). L'antenne s'étend substantiellement le long du support en forme de bracelet, de manière à ce qu'elle soit apte à recevoir le champ magnétique incident quelle que soit l'orientation de l'objet portable dans l'espace.
On notera que l'antenne, de par ses dimensions et sa flexibilité, s'adapte naturellement aux dimensions du poignet de l'utilisateur.
La figure 4a représente une vue schématique de la réception du champ magnétique par l'antenne de la figure 3 lorsque l'objet est porté dans une première orientation au poignet de l'utilisateur (le poignet de l'utilisateur (PO) est sensiblement perpendiculaire au plan de la figure, la paume de la main vers le haut, et le bracelet est enroulé autour de son poignet). Le porteur présente son bracelet, et donc l'antenne, de telle manière que le champ magnétique H, représenté par les flèches verticales, est sensiblement perpendiculaire à l'axe XX longitudinal de l'antenne. L'antenne est immergée dans le champ magnétique.
La figure 4b représente une vue schématique de la réception du champ magnétique par l'antenne lorsque l'objet est porté dans une seconde orientation du poignet de l'utilisateur (le poignet de l'utilisateur est toujours sensiblement perpendiculaire au plan de la figure mais le poignet a tourné dans un sens rétrograde - trigonométrique, comme représenté schématiquement par la flèche T). Le porteur présente son bracelet, et donc l'antenne, de telle manière que le champ magnétique H n'est plus perpendiculaire à l'axe XX longitudinal de l'antenne. Néanmoins, l'antenne reste immergée dans le champ magnétique, et de ce fait la communication est possible entre l'objet et le lecteur.
On notera de surcroît que la puissance moyenne du champ incident reste comparable à celle de la figure 4a (les lignes de force représentées par les flèches verticales sont représentatives de l'amplitude du champ incident).

Les figures 4a et 4b illustrent ainsi une propriété essentielle de l'antenne du bracelet, liée à sa forme et à ses dimensions : quelle que soit l'orientation du poignet de l'utilisateur, ou en d'autres termes la façon dont il présente le bracelet au lecteur NFC (2) lorsqu'il s'en approche, l'antenne reste immergée dans le champ magnétique incident et la communication peut donc s'établir.

On a décrit, à l'aide des figures 2 à 4, une antenne qui présente les trois propriétés recherchées simultanément pour un objet portable selon l'invention : dimensions adéquates pour un bracelet, flexibilité, résistance faible.

Une telle antenne, intégrée dans un objet portable très simple de type bracelet, dépourvu de la moindre alimentation, permet de réaliser des transactions sans contact dans de très bonnes conditions.

Il va de soi que le mode de réalisation qui a été décrit ci-dessus a été donné à titre purement indicatif et nullement limitatif.


**Revendications**

**1.** Objet portable pour la communication en champ proche avec un lecteur externe apte à fournir un champ magnétique (H), l'objet étant dépourvu d'alimentation électrique interne et de moyens de stockage d'énergie, l'objet comprenant :

· un module de communication en champ proche comportant au moins une antenne (AN2) et un microcontrôleur pour gérer la communication en champ proche ;
· un support (BR) en forme de bracelet pour recevoir l'antenne ;
l'objet étant conçu de manière à ce que l'antenne est formée d'une pluralité de spires (S1, S2, S3) s'étendant substantiellement le long du support en forme de bracelet, lesdites spires (S1, S2, S3) définissant un axe central longitudinal (XX), comportant une longueur totale (L) de ladite antenne le long de son axe longitudinal et une largeur (l) de ladite antenne perpendiculairement à son axe longitudinal (XX), **caractérisé en ce que** la largeur (l) est égale à 10 millimètres et la longueur (L) est égale à 100 millimètres, de telle sorte que l'antenne, étant enroulée le long du support (BR), couvre plus que la moitié de la circonférence d'un poignet d'adulte et lorsque l'objet est dans le champ magnétique incident (H), l'antenne est au moins partiellement exposée au champ, quelle que soit l'orientation de l'objet dans l'espace.

**2.** Objet selon la revendication 1, **caractérisé en ce que** la longueur (L) de l'antenne est sensiblement égale à la longueur (L) du support (BR).

**3.** Objet selon la revendication 1, **caractérisée en ce que** la longueur (L) de l'antenne (AN1) est supérieure à la longueur du support (BR).

**4.** Objet selon la revendication 1, **caractérisée en ce que** la largeur (l) de l'antenne (AN1) est choisie sensiblement égale à la largeur du support (BR).

**5.** Objet selon la revendication 1, **caractérisé en ce que** la largeur des spires est égale à la distance inter-spires.

**6.** Objet selon la revendication 1, **caractérisé en ce que** l'antenne comporte

- trois spires (S1, S2, S3)
- une largeur de spires de 0.5mm
- une largeur inter-spires de 0.5 mm.

**7.** Objet portable selon la revendication 1, **caractérisé en ce que** l'antenne est fixée au support (BR) de manière amovible.

**8.** Objet portable selon la revendication 1, **caractérisé en ce que** l'antenne est fixée au support (BR) de manière permanente.

**9.** Objet portable selon la revendication 1, l'antenne comportant une face dite « intérieure » faisant face au poignet lorsque l'objet est porté **caractérisé en ce que** l'antenne est revêtue de plastoferrite sur ladite face intérieure.


**Patentansprüche**

**1.** Tragbares Objekt zur Nahfeldkommunikation mit einem externen Lesegerät, das zu fähig ist, ein Magnetfeld (H) bereitzustellen, wobei das Objekt über keine interne Stromversorgung und keine Energiespeichermittel verfügt, wobei das Objekt Folgendes beinhaltet:

· ein Nahfeldkommunikationsmodul, das mindestens eine Antenne (AN2) und einen Mikrocontroller zur Verwaltung der Nahfeldkommunikation umfasst;
· einen Träger (BR) in Form eines Armbands, um die Antenne aufzunehmen;
wobei das Objekt so ausgelegt ist, dass die Antenne aus einer Vielzahl von Wicklungen (S1, S2, S3) gebildet ist, die sich im Wesentlichen entlang des Trägers in Form eines Armbands erstrecken, wobei die Wicklungen (S1, S2, S3) eine zentrale Längsachse (XX) definieren, umfassend eine Gesamtlänge (L) der Antenne entlang ihrer Längsachse und eine Breite (I) der Antenne senkrecht zu ihrer Längsachse (XX), **dadurch gekennzeichnet, dass** die Breite (I) 10 Millimeter beträgt und die Länge (L) 100 Millimeter beträgt, sodass die Antenne, die entlang des Trägers (BR) gewickelt ist, mehr als die Hälfte des Umfangs eines Handgelenks eines Erwachsenen bedeckt und, wenn sich das Objekt in dem einfallenden Magnetfeld (H) befindet, die Antenne unabhängig von der Orientierung des Objekts im Raum dem Feld mindestens teilweise ausgesetzt ist.

2.  Objekt nach Anspruch 1, **dadurch gekennzeichnet, dass** die Länge (L) der Antenne im Wesentlichen gleich der Länge (L) des Trägers (BR) ist.

3.  Objekt nach Anspruch 1, **dadurch gekennzeichnet, dass** die Länge (L) der Antenne (AN1) größer als die Länge (L) des Trägers (BR) ist.

4.  Objekt nach Anspruch 1, **dadurch gekennzeichnet, dass** die Breite (I) der Antenne (AN1) im Wesentlichen gleich der Breite des Trägers (BR) ausgewählt ist.

5.  Objekt nach Anspruch 1, **dadurch gekennzeichnet, dass** die Breite der Wicklungen gleich dem Abstand zwischen den Wicklungen ist.

6.  Objekt nach Anspruch 1, **dadurch gekennzeichnet, dass** die Antenne Folgendes umfasst:

    - drei Wicklungen (S1, S2, S3),
    - eine Wicklungsbreite von 0,5 mm,
    - eine Breite zwischen den Wicklungen von 0,5 mm.

7.  Tragbares Objekt nach Anspruch 1, **dadurch gekennzeichnet, dass** die Antenne entfernbar an dem Träger (BR) befestigt ist.

8.  Tragbares Objekt nach Anspruch 1, **dadurch gekennzeichnet, dass** die Antenne dauerhaft an dem Träger (BR) befestigt ist.

9.  Tragbares Objekt nach Anspruch 1, wobei die Antenne eine sogenannte "innere" Seite umfasst, die dem Handgelenk gegenüberliegt, wenn das Objekt getragen wird, **dadurch gekennzeichnet, dass** die Antenne auf der inneren Seite mit Plastoferrit beschichtet ist.

**Claims**

1.  Portable object for near-field communication with an external reader which is able to provide a magnetic field (H), the object lacking an internal electric power supply and energy storage means, the object comprising:

    · a near-field communication module comprising at least one antenna (AN2) and a microcontroller for managing the near-field communication;
    · a support (BR) in the form of a bracelet for accommodating the antenna;

    the object being designed so that the antenna is formed of a plurality of turns (S1, S2, S3) extending substantially along the support in the form of a bracelet, said turns (S1, S2, S3) defining a longitudinal central axis (XX), comprising a total length (L) of said antenna along its longitudinal axis and a width (I) of said antenna perpendicular to its longitudinal axis (XX), **characterized in that** the width (I) is equal to 10 millimetres and the length (L) is equal to 100 millimetres, so that the antenna, being wound along the support (BR), covers more than half of the circumference of an adult wrist and, when the object is in the incident magnetic field (H), the antenna is at least partially exposed to the field, whatever the orientation of the object in space.

2.  Object according to Claim 1, **characterized in that** the length (L) of the antenna is substantially equal to the length (L) of the support (BR).

3.  Object according to Claim 1, **characterized in that** the length (L) of the antenna (AN1) is greater than the length of the support (BR).

4.  Object according to Claim 1, **characterized in that** the width (I) of the antenna (AN1) is chosen substantially equal to the width of the support (BR).

5.  Object according to Claim 1, **characterized in that** the width of the turns is equal to the inter-turn distance.

6.  Object according to Claim 1, **characterized in that** the antenna comprises

    - three turns (S1, S2, S3)
    - a turn width of 0.5 mm
    - an inter-turn width of 0.5 mm.

7.  Portable object according to Claim 1, **characterized in that** the antenna is removably attached to the support (BR) .

8.  Portable object according to Claim 1, **characterized in that** the antenna is permanently attached to the support (BR).

9.  Portable object according to Claim 1, the antenna comprising a face referred to as the "inner" face which faces the wrist when the object is worn, **characterized in that** the antenna is coated with plastoferrite on said inner face.

Figure 1

Figure 2

Figure 3

Figure 4a

Figure 4b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015136858 A1, FINN DAVID

**Littérature non-brevet citée dans la description**

- **KLAUS FINKENZELLER.** *RFID-Handbuch - Grundlagen und praktische Anwendungen von Transpondern, kontaktlosen Chipkarten und NFC,* 2015